# EUROPEAN PATENT APPLICATION

(11) **EP 4 597 638 A1**
(43) Date of publication of application: **06.08.2025**
(21) Application number: 24206199.2
(22) Date of filing: 11.10.2024
(51) Int. Cl.: H01M 4/62, H01M 4/66, H01M 10/0525, H01M 4/02, H01M 4/133, H01M 4/134

(54) **NEGATIVE ELECTRODE FOR A RECHARGEABLE LITHIUM BATTERY AND RECHARGEABLE LITHIUM BATTERY INCLUDING THE SAME**

(30) Priority: 30.01.2024 KR 20240014280; 24.09.2024 KR 20240129245
(71) Applicant: SAMSUNG SDI CO., LTD., Yongin-si, Gyeonggi-do 17084 (KR)
(72) Inventor: Cho, Yunshik, Yongin-si, Gyeonggi-do 17084 (KR); Jung, Kyunghwa, Yongin-si, Gyeonggi-do 17084 (KR); Lee, Kukjoo, Yongin-si, Gyeonggi-do 17084 (KR); Choi, Jewon, Yongin-si, Gyeonggi-do 17084 (KR); Cho, Minho, Yongin-si, Gyeonggi-do 17084 (KR); Park, Sujin, Yongin-si, Gyeonggi-do 17084 (KR); Kim, Suhyun, Yongin-si, Gyeonggi-do 17084 (KR)
(74) Representative: Michalski Hüttermann & Partner Patentanwälte mbB

(57) **Abstract**

Disclosed are a negative electrode for a rechargeable lithium battery and a rechargeable lithium battery including the same. The negative electrode for the rechargeable lithium battery includes a current collector, a negative active material layer including an expansion reduction binder, a rubber binder, and a negative active material; and a functional layer between the current collector and the negative active material layer, wherein an amount of the expansion reduction binder is about 0.3 wt% to about 1 wt% based on 100 wt% of the negative active material layer, and an amount of the rubber binder is about 1 wt% to about 1.5 wt% based on 100 wt% of the negative active material layer.

## Description

### BACKGROUND

### 1. Field

Embodiments of the present disclosure relate to a negative electrode for a rechargeable lithium battery and a rechargeable lithium battery including the same.

### 2. Description of the Related Art

Recently, with the rapid spread of electronic devices that use batteries, such as mobile phones, laptop computers, and electric vehicles, a demand for high-energy density and high-capacity rechargeable lithium batteries is rapidly increasing. Research into improving performance of rechargeable lithium batteries is actively being conducted.

Rechargeable lithium batteries include a positive electrode and a negative electrode including an active material capable of intercalating and deintercalating lithium ions, and an electrolyte solution, and electrical energy is produced by oxidation and reduction reactions if lithium ions are intercalated/deintercalated at the positive and negative electrodes.

### SUMMARY

One or more embodiments of the present disclosure provide a negative electrode for a rechargeable lithium battery that exhibits excellent adhesion and improved volume expansion characteristics and cycle-life characteristics.

Another embodiment provides a rechargeable lithium battery including the negative electrode.

One or more embodiments provide a negative electrode for a rechargeable lithium battery including a current collector; a negative active material layer including an expansion reduction binder, a rubber binder, and a negative active material; and a functional layer between the current collector and the negative active material layer, wherein an amount of the expansion reduction binder is about 0.3 wt% to about 1 wt% based on 100 wt% of the negative active material layer, and an amount of the rubber binder is about 1 wt% to about 1.5 wt% based on 100 wt% of the negative active material layer.

Another embodiment provides a rechargeable lithium battery including the negative electrode; a positive electrode; and a non-aqueous electrolyte.

A negative electrode for a rechargeable lithium battery according to some embodiments may exhibit excellent adhesion and may show improved expansion characteristics and cycle-life characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

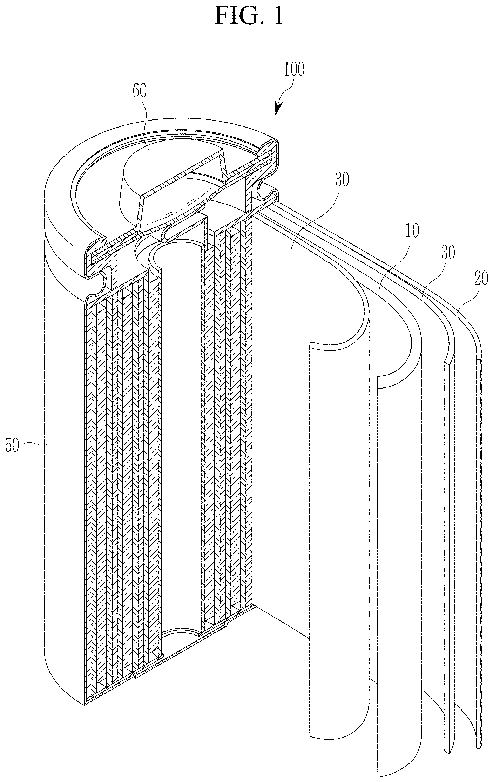

FIG. 1 to FIG. 4 schematically show cross-sectional views of rechargeable lithium batteries according to embodiments of the present disclosure.

### DETAILED DESCRIPTION

Hereinafter, embodiments of the present disclosure are described in more detail. However, these embodiments are examples, the present disclosure is not limited thereto and the scope of the present disclosure is defined by the scope of the appended claims and equivalents thereof.

As used herein, if a definition is not otherwise provided, it will be understood that if an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof" may include a mixture, a laminate, a complex, a copolymer, an alloy, a blend, a reactant of constituents.

As used herein, if a definition is not otherwise provided, a particle diameter may be an average particle diameter. Such a particle diameter may indicate an average particle diameter (D50) where a cumulative volume is about 50 volume% in a particle size distribution. The average particle diameter (D50) may be measured by any suitable method generally used in the art, for example, by a particle size analyzer, and/or by a transmission electron microscopic (TEM) image, and/or a scanning electron microscopic (SEM) image. In some embodiments, a dynamic light-scattering measurement device may be used to perform a data analysis, and the number of particles is counted for each particle size range, and from this, the average particle diameter (D50) value may be easily obtained through a calculation. The particle size may be measured by a laser diffraction method. The laser diffraction method may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50% standard of particle distribution in the measuring device.

In some embodiments, an average particle diameter may be measured by various suitable techniques, and for example, may be measured by a particle size analyzer.

In some embodiments, a thickness may be measured by a SEM or a TEM image for the cross-section, but is not limited thereto, and it may be measured by any suitable techniques, as long as it may measure a thickness in the related arts. The thickness may be an average thickness.

In some embodiments, a weight-average-molecular weight may be measured by using gel permeation chromatography.

As used herein, soft carbon refers to graphitizable carbon materials that are readily graphitized by heat treatment at a high temperature, e.g., about 2800 °C, and hard carbon refers to non-graphitizable carbon materials that are substantially not or slightly graphitized by heat treatment. The soft carbon and the hard carbon may be any suitable ones generally used in the related arts.

A negative electrode for a rechargeable lithium battery according to some embodiments includes a current collector; a negative active material layer; and a functional layer between the current collector and the negative active material layer.

The negative active material layer incudes a binder for reducing expansion (an expansion reduction binder), a rubber binder and a negative active material and an amount of the expansion reduction binder is about 0.3 wt% to about 1 wt% based on 100 wt% of the negative active material layer an amount of the rubber binder is about 1 wt% to about 1.5 wt% based on 100 wt% of the negative active material layer.

The expansion binder refers that a binder for reducing a volume expansion of the negative electrode during charging and discharging.

In one or more embodiments, the functional layer refers to a layer which serve to improve the adhesion of the negative active material layer to the current collector, e.g., the adhesion between the negative active material layer and the current collector.

The negative electrode according to one or more embodiments includes the expansion reduction binder and the rubber binder at set or predetermined amounts in the negative active material layer and includes the functional layer between the current collector and the negative active material layer. If the expansion reduction binder and the rubber binder are used together at a set or predetermined amount, the volume expansion of the negative electrode which may otherwise occur due to charge and discharge may be effectively suppressed or reduced. Inclusion of the functional layer between the current collector and the negative active material layer may provide excellent adhesion between the current collector and the negative active material layer. This enables the negative electrode according to one or more embodiments to exhibit reduced volume expansion and excellent adhesion, thereby exhibiting improved battery physical properties such as improved cycle-life characteristics, and/or the like.

In some embodiments, an amount of the expansion reduction binder may be, based on 100 wt% of the negative active material layer, about 0.3 wt% to about 1 wt% or about 0.5 wt% to about 1 wt%. If the amount of the expansion reduction binder is within the above ranges, the volume expansion of the negative electrode which may otherwise occur due to charge and discharge may be effectively suppressed.

An amount of the rubber binder may be, based on 100 wt% of the negative active material layer, about 1 wt% to about 1.5 wt%, or about 1.2 wt% to about 1.5 wt%

If the amount of rubber binder satisfies the above ranges, excellent adhesion to the current collector may be exhibited.

In some embodiments, the expansion reduction binder may include an acryl-included copolymer. For example, the expansion reduction binder may be an acrylic copolymer. The acryl-included copolymer may include a first monomer, a second monomer, and a third monomer

The first monomer may be acrylic acid, the second monomer may be acrylonitrile, and the third monomer may be an ethyleneglycol group and/or a sulfonate group-included vinyl compound (e.g., a vinly compound including an ethyleneglycol group and/or a sulfonate group).

As used herein, the term "(meth)" may include a methyl group, or it may not include a methyl group. For example, (meth)acrylate indicates acrylate or methacrylate.

The acrylic acid first monomer may be (meth)acrylic acid, metal salts of (meth)acrylic acid, ammonium salts of (meth)acrylic acid, amine salts of (meth)acrylic acid, or a combination thereof, and in some embodiments, it may be metal salts of (meth)acrylic acid.

In the metal salts of the (meth)acrylic acid, the metal may be alkali metals and/or alkaline-earth metals. For example, the metal in the metal salts of the (meth)acrylic acid may be lithium, sodium, potassium, calcium, and/or magnesium. Examples of the metal salts of the (meth)acrylic acid may be sodium acrylate, lithium acrylate, potassium acrylate, calcium acrylate, magnesium acrylate, sodium methacrylate, lithium methacrylate, potassium methacrylate, calcium methacrylate, or a combination thereof.

Examples of the ammonium salts of the (meth)acrylic acid may be an ammonia-neutralized product of (meth)acrylic acid, monoethanolamine-neutralized product, diethanolamine-neutralized product, hydroxylamine-neutralized product, or a combination thereof.

If the acrylic acid first monomer includes metal salts of (meth)acrylic acid which is partially substituted with metal ions as a negative electrode binder, battery resistance may be reduced and the water solubility of the binder may be increased, thereby improving processability the binder.

In some embodiments, in the metal salts of the (meth)acrylic acid, some of the hydrogen atoms may be substituted with a metal or all of the hydrogen atoms may be substituted with a metal. For example, the substitution degree with metal ions of the metal salts of the (meth)acrylic acid may be about 20 mol% to about 100 mol%. The foregoing represents that H⁺ is substituted with metal⁺ in acrylic acid in an amount of about 20 mol% to about 100 mol%, if the total amount of acrylic acid is about 100 mol%.

The substitution degree of the metal salts of the (meth)acrylic acid may be confirmed by various suitable physical chemistry analyses generally available in the related arts, for example, an ICP Spectroscopy (Inductively Coupled Plasma Spectroscopy) method.

In some embodiments, the degree of substitution of the metal salts of the (meth)acrylic acid may also be obtained from the mixing ratio of the metal salts of the (meth)acrylic acid and the (meth)acrylic acid, as the first monomer. For example, the substitution degree of the metal salts of the (meth)acrylic acid of about 20 mol% to about 100 mol% may be obtained by mixing the metal salts of the (meth)acrylic acid and (meth)acrylic acid together at a ratio of 20:80 to 100:0 wt%, as the first monomer.

The third monomer may be a vinyl compound monomer including an ethylene glycol group and/or a sulfonate group, and a weight-average molecular weight (Mw) of the third monomer may be less than about 3000 g/mol, for example, may be about 200 g/mol to about 1000 g/mol. If the weight-average molecular weight (Mw) of the third monomer is less than about 3000 g/mol, the reactivity of the monomer is high, thereby increasing the molecular weight of the synthesized binder and the processability of the slurry for preparing the active material layer.

The vinyl compound monomer including an ethylene glycol group may be polyethylene glycol methacrylate monomer, and the vinyl compound including the sulfonate group may be sodium styrene sulfonate.

If the third monomer is the vinyl compound monomer including an ethylene glycol group, amounts of each monomer may be as described below.

An amount of the first monomer may be, based on the total 100 wt% of the first monomer, the second monomer, and the third monomer, about 30 wt% to about 80 wt%, or about 35 wt% to about 75 wt%. An amount of the second monomer may be, based on the total 100 wt% of the first monomer, the second monomer, and the third monomer, about 19 wt% to about 50 wt%, or about 22 wt% to about 45 wt%. An amount of the third monomer may be, based on the total 100 wt% of the first monomer, the second monomer, and the third monomer, about 1 wt% to about 20 wt%, or about 3 wt% to about 15 wt%.

If the amount of the third monomer is within the above ranges, the cycle-life and power characteristics may be more enhanced.

If the amounts of the acrylic acid first monomer, the acrylonitrile second monomer, and the third monomer satisfy the above ranges, the resulting copolymer may have suitable or appropriate water-solubility, the processability of the negative electrode preparation using the copolymer may be secured, and the resistance (e.g., electrical resistance) of the negative electrode may be effectively reduced.

If the third monomer includes the vinyl compound including the sulfonate group, amounts of each monomer may be as described below.

In the acryl copolymer including the first monomer, the second monomer, and the third monomer, an amount of the first monomer may be, based on the total 100 wt% of the first monomer, the second monomer, and the third monomer, about 10 wt% to about 50 wt%, or about 15 wt% to about 45 wt%. If the amount of the first monomer is within the above ranges, the copolymer may be easily dissolved in water, the dispersibility of the negative active material and the storage stability of the negative active material layer composition may be further enhanced and occurrence of cracks may be effectively suppressed or reduced in the negative electrode preparation.

An amount of the second monomer may be, based on total 100 wt% of the first monomer, the second monomer, and the third monomer, about 20 wt% to about 50 wt%, or about 25 wt% to about 45 wt%. If the amount of the second monomer is within the above ranges, the adhesion of the negative active material layer to the current collector may be further enhanced and the dispersibility of the negative active material and the storage stability of the negative active material layer composition may be further enhanced.

An amount of the third monomer may be, based on total 100 wt% of the first monomer, the second monomer, and the third monomer, about 10 wt% to about 50 wt%, or about 15 wt% to about 45 wt%. If the amount of the third monomer is within the above ranges, occurrence of cracks may be further effectively suppressed or reduced in the negative electrode preparation.

In some embodiments, the expansion reduction binder may be prepared by mixing together the first monomer, the second monomer, and the third monomer at a range of a suitable or appropriate amount, adding an initiator and a solvent to the resulting mixture, and reacting the resulting mixture through a copolymerization reaction. The initiator may be any suitable compounds capable of generating copolymerization such as, for example, benzoyl peroxide, azobisisobutyronitrile, and/or the like.

In some embodiments, the rubber binder may be a styrene-butadiene rubber, a (meth)acrylated styrene-butadiene rubber, a (meth)acrylonitrile-butadiene rubber, a (meth)acrylic rubber, a butyl rubber, a fluorine rubber, or a combination thereof

The negative active material layer may further include a cellulose compound. The cellulose compound may include one or more of carboxymethyl cellulose, hydroxypropylmethyl cellulose, methyl cellulose, or alkali metal salts thereof. The alkali metal may be Na, K, and/or Li.

If the negative active material layer further includes the cellulose compound, an amount of the cellulose compound may be, based 100 wt% of the negative active material layer, more than about 0 wt% and about 1 wt% or less, about 0.1 wt% to about 0.8 wt%, or about 0.3 wt% to about 0.7 wt%. If the amount of the cellulose compound is within the above ranges, the negative electrode slurry for preparing the negative active material layer may be further effectively and easily coated.

In some embodiments, the negative active material may be a silicon-based negative active material. The silicon-based negative active material may provide improved current density and high-capacity, but may cause significant volume expansion during charge and discharge. In some embodiments, the expansion reduction binder and the rubber binder are used in the negative active material layer at set or predetermined amounts, and thus, the volume expansion of the silicon-based negative active material may be effectively suppressed or reduced, thereby sufficiently utilizing the merits of the silicon-based negative active material.

The silicon-based negative active material may be a silicon-carbon composite.

The carbon of the silicon-carbon composite may include amorphous carbon, or may include amorphous carbon and crystalline carbon

The crystalline carbon may be natural graphite, artificial graphite, or a combination thereof. The amorphous carbon may be soft carbon, hard carbon, mesophase pitch carbide, sintered coke, or a combination thereof.

The silicon-carbon composite may include silicon particles and an amorphous carbon coated on a surface of the silicon particle. For example, the silicon-carbon composite may include silicon particles and an amorphous carbon coating layer on a surface of the silicon particles. In some embodiments, the silicon-carbon composite may include secondary particles (core) where silicon primary particles are agglomerated and an amorphous carbon coating layer (shell) on a surface of the secondary particles. The amorphous carbon may be between the silicon primary particles, for example, to coat the silicon primary particles. For example, the secondary particle may be distributed in an amorphous carbon matrix. The silicon primary particles may be nano silicon particles. The nano silicon particles may have a particle diameter of about 10 nm to about 900 nm, about 10 nm to about 800 nm, about 10 nm to about 500 nm, about 10 nm to about 300 nm or about 10 nm to about 200 nm. If the average particle diameter of the nano silicon particles is within the above ranges, the extreme volume expansion that would otherwise occur during charge and discharge may be suppressed or reduced, and a breakage of the conductive path due to crushing of the nano silicon particles may be prevented or reduced. In some embodiments, the particle diameter of the silicon secondary particle is not necessarily limited.

The amorphous carbon may include a soft carbon, a hard carbon, a mesophase pitch carbonization product, calcined coke, carbon fiber, and/or the like.

The thickness of the amorphous carbon coating layer may be suitably or appropriately adjusted and may be, for example, about 2 nm to about 800 nm, about 5 nm to about 600 nm, about 10 nm to about 400 nm, or about 20 nm to about 200 nm. In one or more embodiments, the thickness of the amorphous carbon coating layer may be measured by a SEM image and/or a TEM image for the cross-section of the silicon-carbon composite, but it is not limited thereto, and it may be measured by any suitable techniques as long as the thickness of the amorphous carbon coating layer may be measured.

A particle diameter of the silicon-carbon composite may be suitably or appropriately adjusted and may be, for example, about 30 µm or less, for example, about 1 µm to about 30 µm, about 2 µm to about 25 µm, about 3 µm to about 20 µm, or about 5 µm to about 15 µm.

Based on 100 wt% of the silicon-carbon composite, an amount of the silicon particles may be about 30 wt% to about 70 wt% or about 40 wt% to about 65 wt%

An amount of the amorphous carbon may be, based on the total 100 wt% of the silicon-carbon composite, about 30 wt% to about 70 wt%, or about 35 wt% to about 60 wt%. If the amounts of the silicon particles and the amorphous carbon are within the above ranges, higher capacity may be realized.

In the silicon-carbon composite, the carbon may include amorphous carbon and crystalline carbon.

In some embodiments, the silicon-carbon composite may include a core including silicon particles and crystalline carbon, and an amorphous carbon coating layer on a surface of the core. For example, the silicon-carbon composite may include a core including secondary particles where the silicon primary particles and crystalline carbon are agglomerated, and an amorphous carbon coating layer on the core. The amorphous carbon may be between the silicon primary particles and/or between the crystalline carbon, allowing the amorphous carbon to be filled between the silicon primary particles and the crystalline carbon.

The crystalline carbon may include unspecified shape, sheet, flake, spherical and/or fiber shaped natural graphite and/or artificial graphite.

If the silicon-carbon composite includes silicon particles, crystalline carbon, and an amorphous carbon, an amount of the crystalline carbon may be, based on the total 100 wt% of the silicon particle, the amorphous carbon, and the crystalline carbon, about 10 wt% to about 70 wt%, for example, about 10 wt% to about 60 wt%. If the crystalline carbon is included in the above ranges, the conductivity (e.g., electrical conductivity) may be further enhanced.

An amount of the amorphous carbon may be, based on the total 100 wt% of the silicon particle, the amorphous carbon, and the crystalline carbon, about 20 wt% to about 40 wt%, e.g., about 20 wt% to about 30 wt%. An amount of the silicon particles may be, based on the total 100 wt% of the silicon particle, the amorphous carbon, and the crystalline carbon, about 10 wt% to about 70 wt%, e.g., about 10 wt% to about 60 wt%.

In the negative electrode according to some embodiments, the negative active material may include a carbon-based negative active material, together with the silicon-based negative active material. If the silicon-based negative active material is used together with the carbon-based negative active material, a mixing ratio of the silicon-based negative active material and the carbon-based negative active material may be about 1:99 to about 50:50 by weight ratio. In some embodiments, the mixing ratio of the silicon-based negative active material and the carbon-based negative active material may be about 5:95 to about 20:80 by weight ratio.

In the negative active material layer, an amount of the negative active material may be, based on 100 wt% of the negative active material layer, about 97 wt% to about 98.7 wt%, or about 97.5 wt% to about 98.7 wt%.

In some embodiments, the negative active material layer may further include a conductive material (e.g., an electrically conductive material). If the conductive material is further included, based on the total 100 wt% of the negative active material layer, an amount of the binder may be about 1 wt% to about 5 wt%, an amount of the negative active material may be about 90 wt% to about 98.999 wt%, and an amount of the conductive material may be about 0.001 wt% to about 5 wt%.

The conductive material may be included to provide electrode conductivity (e.g., electrical conductivity). Any suitable electrically conductive material may be utilized as a conductive material (e.g., an electrically conductive material) unless it causes a chemical change (e.g., an undesirable chemical change in the rechargeable lithium battery). Non-limiting examples of the conductive material may be a carbon-based material such as natural graphite, artificial graphite, carbon black, acetylene black, ketjen black, a carbon fiber, carbon nanofiber, carbon nanotubes, and/or the like; a metal-based material of a metal powder and/or a metal fiber including copper, nickel, aluminum, silver, and/or the like; a conductive polymer (e.g., an electrically conductive polymer) such as a polyphenylene derivative; or one or more mixtures (and/or combinations) thereof.

In some embodiments, the functional layer may include a carbon-based material and a binder.

Providing the functional layer between the current collector and the negative active material layer may lead to improve the adhesion of the negative active material layer to the current collector.

The carbon-based material may be crystalline carbon, amorphous carbon, or a combination thereof. Examples of the crystalline carbon may be unspecified-shaped, a sheet-shaped, a flake-shaped, a spherical-shaped and/or a fiber-shaped artificial graphite, natural graphite, or a combination thereof, and examples of the amorphous carbon may be soft carbon, hard carbon, mesophase pitch carbide, sintered coke, carbon black, and/or the like.

The binder may be a non-aqueous binder, an aqueous binder, or a combination thereof.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

In some embodiments, an amount of the carbon-based material may be, based on 100 wt% of the functional layer, about 10 wt% to about 60 wt%, or about 20 wt% to about 50 wt%. If the amount of the carbon-based material satisfies the above ranges, more suitable electron conductive (e.g., electrical conductivity) and coating processability may be concurrently (e.g., simultaneously) obtained.

An amount of the binder may be, based on 100 wt% of the functional layer, about 40 wt% to 90 wt%, or about 50 wt% to about 80 wt%. If the amount of the binder is within the above ranges, the functional layer may be well adhered to the current collector.

The current collector may include one selected from a copper foil, a nickel foil, a stainless steel foil, a titanium foil, a nickel foam, a copper foam, a polymer substrate coated with a conductive metal (e.g., an electrically conductive metal), and one or more combinations thereof, but embodiments of the present disclosure are not limited thereto.

### Rechargeable lithium battery

Another embodiment provides a rechargeable lithium battery including the negative electrode, a positive electrode, and an electrolyte.

### Positive electrode

The positive electrode may include a current collector and a positive active material layer on the current collector. The positive active material layer includes a positive active material and may further include a binder and/or a conductive material (e.g., an electrically conductive material).

For example, the positive electrode may further include an additive that may serve as a sacrificial positive electrode.

An amount of the positive active material may be, about 90 wt% to about 99.5 wt% or about 90 wt% to about 99 wt% based on 100 wt% of the positive active material layer, and amounts of the binder and the conductive material may be respectively 0.5 wt% to 5 wt% based on 100 wt% of the positive active material layer.

The positive active material may include a compound (e.g., a lithiated intercalation compound) that is capable of intercalating and deintercalating lithium. In some embodiments, at least one of a composite oxide of lithium and a metal selected from cobalt, manganese, nickel, or combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one selected from the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001 ≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001 ≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive active material may be may be a high nickel-based positive active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive active material may realize high capacity and may be applied to a high-capacity, high-density rechargeable lithium battery.

The binder improves binding properties of positive active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but are not limited thereto.

The conductive material is included to provide electrode conductivity (e.g., electrical conductivity), and any suitable electrically conductive material may be used as a conductive material (e.g., an electrically conductive material) unless it causes a chemical change (e.g., an undesirable chemical change in the rechargeable lithium battery). Examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

The current collector may include Al, but is not limited thereto.

### Electrolyte

The electrolyte includes a non-aqueous organic solvent and a lithium salt.

The non-aqueous organic solvent serves as a medium that transmits ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and/or the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The organic solvent may be used alone or in a mixture of two or more.

If the carbonate-based solvent is used, the cyclic carbonate and the linear carbonate may be used together therewith, and the cyclic carbonate and the linear carbonate may be mixed together at a volume ratio of about 1:1 to about 1:9.

The lithium salt dissolved in an organic solvent supplies a battery with lithium ions, basically operates the rechargeable lithium battery, and improves transportation of the lithium ions between positive and negative electrodes. Examples of the lithium salt include one or at least two supporting electrolyte salt selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of 1 to 20, lithium trifluoromethane sulfonate, lithium tetrafluoroethane sulfonate, lithium difluorobis(oxalato)phosphate (LiDFOP), and lithium bis(oxalato) borate (LiBOB).

### Separator

A separator may be between the positive electrode and the negative electrode depending on a type (or kind) of a rechargeable lithium battery. The separator may use polyethylene, polypropylene, polyvinylidene fluoride or multilayers thereof having two or more layers and may be a mixed together multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including an organic material, an inorganic material, or a combination thereof on one or both surfaces (e.g., one or two opposing surfaces) of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acryl-based polymer.

The inorganic material may be an inorganic particle selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a combination thereof, but is not limited thereto.

The organic material and an inorganic material may be mixed together in one coating layer, or a coating layer including an inorganic material may be stacked together.

The rechargeable lithium battery may be classified into cylindrical, prismatic, pouch, or coin-type batteries, and/or the like depending on their shape.

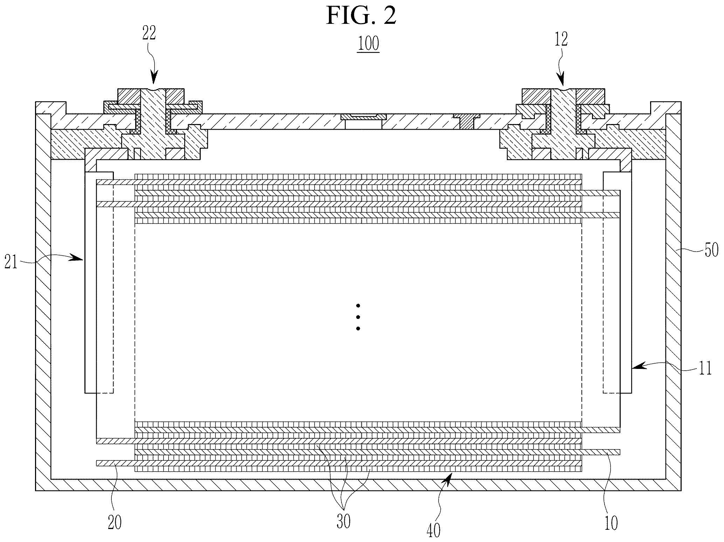

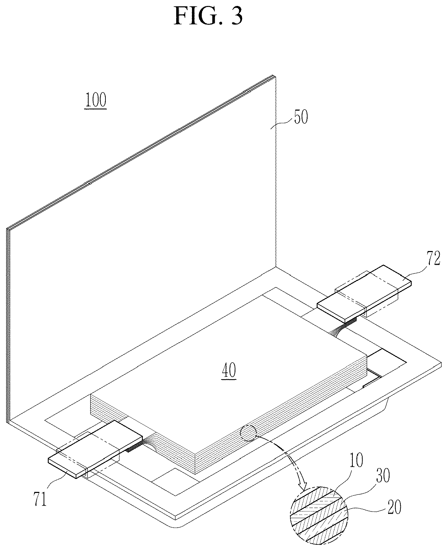

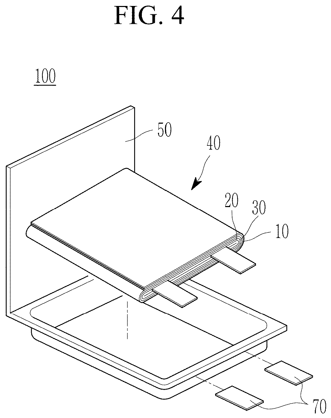

FIG. 1 to FIG. 4 are schematic views illustrating a rechargeable lithium battery according to an embodiment, and FIG. 1 shows a cylindrical battery, FIG. 2 shows a prismatic battery, and FIG. 3 and FIG. 4 show pouch-type batteries. Referring to FIGS. 1-4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 that seals the case 50, as shown in FIG. 1. In FIG. 2, the rechargeable lithium battery 100 may include a positive electrode lead tab 11 and a positive terminal 12, a negative electrode lead tab 21, and a negative terminal 22. As shown in FIG. 3 and FIG. 4, the rechargeable lithium battery 100 may include an electrode tab 70 (FIG. 4), which may serve as an electrical path for inducing the current formed in the electrode assembly 40 to the outside, for example, a positive electrode tab 71 and a negative electrode tab 72 (FIG. 3).

The rechargeable lithium battery according to an embodiment may be applied to automobiles, mobile phones, and/or various suitable types (or kinds) of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Example.

### Example 1

An acrylic acid (AA) first monomer, an acrylonitrile (AN) second monomer, polyethylene glycol) methacrylate (weight-average-molecular weight (Mw)=300g/mol) third monomer were added to a reactor at an amount of 45 wt%, 40 wt%, and 15 wt%, respectively, and then a benzoyl peroxide initiator and water were added to the reactor to initiate a copolymerization reaction.

Lithium hydroxide was added to the resulting copolymerization reaction product and agitated to prepare a binder aqueous solution including a copolymer of an acrylic acid first monomer, an acrylonitrile second monomer, and a polyethyleneglycol methacrylate third monomer as an expansion reduction binder. An amount of lithium hydroxide used was adjusted to substitute 60 mol% of the acrylic acid first monomer with lithium ions, and thus the resulting product was prepared as an expansion reduction binder being a copolymer including lithium polyacrylate, in which 60 mol% of an acrylic group included in the acrylic acid first monomer was substituted with lithium ions. The lithium ion substitution degree of the acrylic acid first monomer was found to be 60 mol% by measuring utilizing ICP Spectroscopy.

The binder aqueous solution had a viscosity of 2,670 cps at 25 °C based on 6 wt% of a solid amount.

A negative active material, the binder aqueous solution, and styrene-butadiene rubber were mixed together in order to provide the negative active material, the expansion reduction binder, and the styrene-butadiene rubber at amounts of 97.5 wt%, 1 wt%, and 1.5 wt%, respectively, to prepare a negative active material layer slurry having a viscosity of 1,120 cps (at 25 °C).

The negative active material was used as a mixed active material of a blending of artificial/natural graphite and a silicon-carbon composite (mixing ratio of 90:10 by weight). The silicon-carbon composite included an agglomerated product in which artificial graphite and silicon nanoparticles are agglomerated and a soft carbon coating layer on the surface of the agglomerated product. An amount of artificial graphite was 40 wt%, an amount of the silicon nanoparticles was 40 wt%, and an amount of the soft carbon was 20 wt% based on the total weight of the silicon-carbon composite.

40 wt% of carbon black and 60 wt% of a styrene-butadiene rubber binder were mixed together in a water solvent to prepare a functional layer slurry.

The functional layer slurry was coated on a copper current collector and dried to prepare a functional layer having a thickness of 1 µm.

The negative active material layer slurry was coated on the functional layer, dried, and pressurized to prepare a negative electrode.

96 wt% of a LiNi_{0.8}Co_{0.1}Mn_{0.1}O₂ positive active material, 2 wt% of Ketjen black, and 2 wt% of polyvinylidene fluoride were mixed in an N-methyl pyrrolidone solvent to prepare a positive active material layer slurry. The positive active material layer slurry was coated on an Al foil current collector, dried, and pressurized to prepare a positive electrode.

Using the negative electrode, the positive electrode, and an electrolyte, a full cell was fabricated. As the electrolyte, 1.5 M LiPF₆ dissolved in ethylene carbonate, ethylmethyl carbonate, and dimethyl carbonate (20:10:70 volume ratio), was used.

### Example 2

The negative active material of Example 1, a sodium salt of carboxymethyl cellulose, the binder aqueous solution of Example 1, and a styrene-butadiene rubber were mixed together in order to provide the negative active material, the sodium salt of carboxymethyl cellulose, the expansion reduction binder, and the styrene-butadiene rubber at amounts of 97.5 wt%, 0.3 wt%, 0.7 wt%, and 1.5 wt%, respectively, to prepare a negative active material layer slurry having a viscosity of 1,830 cps (at 25 °C).

A negative electrode and a full cell were fabricated by the same procedure as in Example 1, except for using the above negative active material layer slurry.

### Example 3

The negative active material of Example 1, a sodium salt of carboxymethyl cellulose, the binder aqueous solution of Example 1, and a styrene-butadiene rubber were mixed together in order to provide the negative active material, the sodium salt of carboxymethyl cellulose, the expansion reduction binder, and the styrene-butadiene rubber at amounts of 97.5 wt%, 0.7 wt%, 0.3 wt%, and 1.5 wt%, respectively, to prepare a negative active material layer slurry having a viscosity of 2,370 cps (at 25 °C).

A negative electrode and a full cell were fabricated by the same procedure as in Example 1, except for using the above negative active material layer slurry.

### Example 4

The negative active material of Example 1, the binder aqueous solution of Example 1, and a styrene-butadiene rubber were mixed together in order to provide the negative active material, the expansion reduction binder, and the styrene-butadiene rubber at amounts of 98 wt%, 1 wt%, and 1 wt%, respectively, to prepare a negative active material layer slurry having a viscosity of 1,090 cps (at 25 °C).

A negative electrode and a full cell were fabricated by the same procedure as in Example 1, except for using the above negative active material layer slurry.

### Example 5

A binder aqueous solution and a negative active material layer slurry having a viscosity of 1,230 cps (at 25 °C) were prepared by the same procedure as in Example 1, except for using 15 wt% of sodium styrene sulfonate, instead of 15 wt% of polyethyleneglycol methacrylate as the third monomer.

A negative electrode and a full cell were fabricated by the same procedure as in Example 1, except for using the above negative active material layer slurry.

### Example 6

A negative active material layer slurry having a viscosity of 1,960 cps (at 25 °C) was prepared by the same procedure as in Example 2, except for using the binder aqueous solution of Example 5.

A negative electrode and a full cell were fabricated by the same procedure as in Example 1, except for using the above negative active material layer slurry.

### Example 7

A negative active material layer slurry having a viscosity of 2,410 cps (at 25 °C) was prepared by the same procedure as in Example 3, except for using the binder aqueous solution of Example 5.

A negative electrode and a full cell were fabricated by the same procedure as in Example 1, except for using the above negative active material layer slurry.

### Example 8

A negative active material layer slurry having a viscosity of 1,150 cps (at 25 °C) was prepared by the same procedure as in Example 4, except for using the binder aqueous solution of Example 5.

A negative electrode and a full cell were fabricated by the same procedure as in Example 1, except for using the above negative active material layer slurry.

### Comparative Example 1

The negative active material of Example 1, a sodium salt of carboxymethyl cellulose, and a styrene-butadiene rubber were mixed together in order to provide the negative active material, the sodium salt of carboxymethyl cellulose, and the styrene-butadiene rubber at amounts of 97.5 wt%, 1 wt%, and 1.5 wt%, respectively, to prepare a negative active material layer slurry having a viscosity of 2,850 cps (at 25 °C).

The negative active material layer slurry was coated on a copper current collector, dried, and pressurized to prepare a negative electrode.

A full cell was fabricated by the same procedure as in Example 1, except for using the above negative electrode.

### Comparative Example 2

The negative active material layer slurry of Comparative Example 1 was coated on a copper current collector on which the functional layer was formed of Example 1, dried, and pressurized to prepare a negative electrode.

A full cell was fabricated by the same procedure as in Example 1, except for using the above negative electrode.

### Comparative Example 3

The negative active material of Example 1, a sodium salt of carboxymethyl cellulose, the binder aqueous solution of Example 1, and a styrene-butadiene rubber were mixed together in order to provide the negative active material, the sodium salt of carboxymethyl cellulose, the expansion reduction binder, and the styrene-butadiene rubber at amounts of 97.5 wt%, 0.8 wt%, 0.2 wt%, and 1.5 wt%, respectively, to prepare a negative active material layer slurry having a viscosity of 2,570 cps (at 25 °C).

A negative electrode and a full cell were fabricated by the same procedure as in Example 1, except for using the above negative active material layer slurry.

### Comparative Example 4

The negative active material of Example 1, the binder aqueous solution of Example 1, and the styrene-butadiene rubber were mixed together to provide the negative active material, the expansion reduction binder, and the styrene-butadiene rubber at amounts of 97.2 wt%, 1.3 wt%, and 1.5 wt%, respectively, to prepare a negative active material layer slurry having a viscosity of 1380 cps (at 25 °C).

A negative electrode and a full cell were fabricated by the same procedure as in Example 1, except for using the above negative active material layer slurry.

### Comparative Example 5

The negative active material of Example 1, the binder aqueous solution of Example 1, and the styrene-butadiene rubber were mixed together in order to provide the negative active material, the copolymer binder, and the styrene-butadiene rubber at amounts of 97.5 wt%, 1 wt%, and 1.5 wt%, respectively, to prepare a negative active material layer slurry having a viscosity of 1120 cps (at 25 °C).

The negative active material layer slurry was coated on a copper current collector, dried, and pressurized to prepare a negative electrode.

A full cell was fabricated by the same procedure as in Example 1, except for using the above negative electrode.

### Comparative Example 6

The negative active material of Example 1, the binder aqueous solution of Example 1, and the styrene-butadiene rubber were mixed together in order to provide the negative active material, the copolymer binder, and the styrene-butadiene rubber at amounts of 97 wt%, 1 wt%, and 2.0 wt%, respectively, to prepare a negative active material layer slurry having a viscosity of 1120 cps (at 25 °C).

The negative active material layer slurry was coated on a copper current collector, dried, and pressurized to prepare a negative electrode.

A full cell was fabricated by the same procedure as in Example 1, except for using the above negative electrode.

### Comparative Example 7

The negative active material layer slurry of Comparative Example 6 was coated on the copper current collector on which the functional layer was formed of Example 1, dried, and pressurized to prepare a negative electrode.

A full cell was fabricated by the same procedure as in Example 1, except for using the above negative electrode.

### Comparative Example 8

The negative active material of Example 1, carboxymethyl cellulose sodium salt, the binder aqueous solution of Example 5, and the styrene-butadiene rubber were mixed together in order to provide the negative active material, carboxymethyl cellulose sodium salt, the expansion reduction binder, and the styrene-butadiene rubber at amounts of 97.5 wt%, 0.8 wt%, 0.2 wt%, and 1.5 wt%, respectively, to prepare a negative active material layer slurry having a viscosity of 2630 cps (at 25 °C).

A negative electrode and full cells were fabricated by the same procedure as in Example 1, except for using the above negative active material layer slurry.

### Comparative Example 9

The negative active material of Example 1, the binder aqueous solution of Example 5, and the styrene-butadiene rubber were mixed together in order to provide the negative active material, the expansion reduction binder, and the styrene-butadiene rubber at amounts of 97.2 wt%, 1.3 wt%, and 1.5 wt%, respectively, to prepare a negative active material layer slurry having a viscosity of 1450 cps (at 25 °C).

A negative electrode and full cells were fabricated by the same procedure as in Example 1, except for using the above negative active material layer slurry.

### Comparative Example 10

The negative active material of Example 1, the binder aqueous solution of Example 5, and the styrene-butadiene rubber were mixed together in order to provide the negative active material, the expansion reduction binder, and the styrene-butadiene rubber at amounts of 97.5 wt%, 1 wt%, and 1.5 wt%, respectively, to prepare a negative active material layer slurry with a viscosity of 1180 cps (at 25 °C).

The negative active material layer slurry was coated on a copper current collector, dried, and pressurized to prepare a negative electrode

A full cell was fabricated by the same procedure as in Example 1, except for using the above negative electrode.

### Experimental Example 1) Evaluation of adhesion

The adhesions of the negative electrodes according to Examples 1 to 8 and Comparative Examples 1 to 10 were measured by the following procedures.

A tape attached to a slide glass was attached to the second active material layer and then the tape was peeled from the second active material layer using a 180° UTM tensile strength tester to measure the adhesive force

The speed for detaching was set to 100 mm/min, the measurements were performed three times to obtain an average of the force required to peel 40 mm after starting peeling. The results are shown in Table 1.

### Experimental Example 2) Evaluation of crack occurrence

The crack occurrences on the surfaces of the negative electrodes according to Examples 1 to 8 and Comparative Example 1 to 10 just after drying were observed with naked eyes (e.g., unassisted human eyes). Crack occurrence as "o" and no crack occurrence as "X" are shown in Table 1.

### Experimental Example 3) Evaluation of DC internal resistance (DC-IR)

The full cells according to Examples 1 to 8 and Comparative Examples 1 to 10 were once charged and discharged under a charging at 0.2 C and a discharging at 0.2 C at 25 °C, and a voltage drop (V) was measured, while a current flowed at 1 C for 1 second under a SOC50 (charged to be 50% of charge capacity based on 100% of entire battery charge capacity, which is 50% discharged in a discharge state). From the results, DC internal resistance (DC-IR) was calculated. The results are shown in Table 1.

### Experimental Example 4) Evaluation of expansion ratio

The rechargeable full cells according to Examples 1 to 8 and Comparative Examples 1 to 10 were charged and discharged 30 times under a condition of 0.5 C constant current-constant voltage (CC-CV), 4.2 V, and 0.05 C cut-off, and 0.5 C constant current (CC) and 2.5 V cut-off. A thickness of the battery before charging and discharging and a thickness after charging and discharging were measured and an expansion ratio of the negative electrode was calculated by Equation 1. Expansion ratio (%)={(cell thickness after charging and discharging -cell thickness before charging and discharging)/cell thickness before charging and discharging}*100

### Experimental Example 5) Evaluation of cycle-life characteristic

The full cells according to Examples 1 to 8 and Comparative Examples 1 to 10 were charged and discharged 100 times under a condition of 0.5 C constant current-constant voltage (CC-CV) 4.25 V, and 0.05 C cut-off charge and 0.5 C constant current (CC) and 2.5 V cut-off discharge.

A ratio of 100^{th} charge capacity relative to 1^{st} charge capacity was calculated. The results are shown in Table 1 as a capacity retention (%).

**Table 1**

| | Adhesion (gf/mm) | Crack | DC-IR (mΩ) | Expansion ratio (%) | Capacity retention (%) |
|---|---|---|---|---|---|
| Example 1 | 1.7 | X | 102.3 | 15.3 | 96.4 |
| Example 2 | 2.1 | X | 101.7 | 18.0 | 94.7 |
| Example 3 | 2.4 | X | 101.5 | 20.3 | 93.8 |
| Example 4 | 1.2 | X | 78.6 | 18.9 | 92.4 |
| Example 5 | 1.9 | X | 103.0 | 16.1 | 95.9 |
| Example 6 | 2.5 | X | 102.8 | 19.8 | 94.5 |
| Example 7 | 2.7 | X | 102.1 | 21.2 | 93.2 |
| Example 8 | 1.4 | X | 78.1 | 20.1 | 91.8 |
| Comparative Example 1 | 1.5 | X | 100.7 | 26.8 | 78.8 |
| Comparative Example 2 | 2.8 | X | 98.5 | 25.9 | 85.2 |
| Comparative Example 3 | 2.4 | X | 99.0 | 23.8 | 85.0 |
| Comparative Example 4 | 1.9 | ○ | Impossible to fabricate cell | Impossible to fabricate cell | Impossible to fabricate cell |
| Comparative Example 5 | 0.8 | X | 102.9 | 22.1 | 86.2 |
| Comparative Example 6 | 1.3 | X | 126.5 | 18.5 | 88.5 |
| Comparative Example 7 | 2.5 | ○ | 125.4 | 15.1 | 89.4 |
| Comparative Example 8 | 2.5 | ○ | 99.1 | 24.1 | 84.5 |
| Comparative Example 9 | 2.2 | ○ | Impossible to fabricate cell | Impossible to fabricate cell | Impossible to fabricate cell |
| Comparative Example 10 | 0.9 | X | 103.5 | 23.1 | 84.8 |

As shown in Table 1, the cells including the negative electrodes according to Examples 1 to 8 which included the expansion reduction binder and the rubber binder at set or predetermined amounts and the functional layer exhibited excellent adhesion, no observable occurrence of cracks, low DC resistance and expansion ratio, and excellent cycle-life characteristics.

The cells according to Comparative Examples 1 and 2 without using the expansion reduction binder, and the cells according to Comparative Examples 3 and 8 including the expansion reduction binder at an extremely small amount exhibited high expansion ratio and low cycle-life characteristics.

Comparative Examples 4 and 9 using the expansion reduction binder at an amount that was too large were impossible to fabricate a cell. The cells according to Comparative Examples 5 and 10 without the functional layer exhibited high expansion ratio and low cycle-life characteristics, and the cell of Comparative Example 6 including the rubber binder at a large amount and including no functional layer exhibited very high resistance and slightly low cycle-life characteristics.

The cell of Comparative Example 7 which includes the functional layer, but does not use an expansion reduction binder exhibited high resistance, and slightly low cycle-life characteristics.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof.

## Claims

1. A negative electrode (20) for a rechargeable lithium battery (100), comprising:
a current collector;
a negative active material layer comprising an expansion reduction binder, a rubber binder, and a negative active material; and
a functional layer between the current collector and the negative active material layer,
wherein an amount of the expansion reduction binder is about 0.3 wt% to about 1 wt% based on 100 wt% of the negative active material layer, and
an amount of the rubber binder is about 1 wt% to about 1.5 wt% based on 100 wt% of the negative active material layer.

2. The negative electrode (20) for a rechargeable lithium battery (100) as claimed in claim 1, wherein the expansion reduction binder comprises an acryl-included copolymer.

3. The negative electrode (20) for a rechargeable lithium battery (100) as claimed in claim 1 or 2, wherein the acryl-included copolymer comprises an acrylic acid first monomer, an acrylonitrile second monomer, and an ethyleneglycol group and/or sulfonate group-included vinyl compound third monomer.

4. The negative electrode (20) for a rechargeable lithium battery (100) as claimed in any of the claims 1 to 3, wherein the acrylic acid first monomer comprises (meth)acrylic acid, metal salts of (meth)acrylic acid, ammonium salts of (meth)acrylic acid, amine salts of (meth)acrylic acid, or a combination thereof, where preferably the metal salts of the (meth)acrylic acid, the metal comprises alkali metals and/or alkaline-earth metals, most preferred the metal salts of the (meth)acrylic acid comprises sodium acrylate, lithium acrylate, potassium acrylate, calcium acrylate, magnesium acrylate, sodium methacrylate, lithium methacrylate, potassium methacrylate, calcium methacrylate, or a combination thereof.

5. The negative electrode (20) for a rechargeable lithium battery (100) as claimed in any of the claims 1 to 4, wherein the metal salts of the (meth)acrylic acid has a substitution degree with metal ions of about 20 mol% to about 100 mol%.

6. The negative electrode (20) for a rechargeable lithium battery (100) as claimed in any of the claims 1 to 4, wherein the third monomer has a weight average molecular weight (Mw) of less than about 3000 g/mol, preferably about 200 g/mol to about 1000 g/mol.

7. The negative electrode (20) for a rechargeable lithium battery (100) as claimed in any of the claims 1 to 6, wherein the third monomer comprises a polyethylene glycol methacrylate and/or sodium styrene sulfonate.

8. The negative electrode (20) for a rechargeable lithium battery (100) as claimed in any of the claims 1 to 7, wherein the rubber binder comprises a styrene-butadiene rubber, a (meth)acrylated styrene-butadiene rubber, a (meth)acrylonitrile-butadiene rubber, a (meth)acrylic rubber, a butyl rubber, a fluorine rubber, or a combination thereof.

9. The negative electrode (20) for a rechargeable lithium battery (100) as claimed in any of the claims 1 to 8, wherein the functional layer comprises a carbon-based material and a binder.

10. The negative electrode (20) for a rechargeable lithium battery (100) as claimed in any of the claims 1 to 9, wherein the carbon-based material comprises crystalline carbon, amorphous carbon, or a combination thereof.

11. The negative electrode (20) for a rechargeable lithium battery (100) as claimed in any of the claims 1 to 10, wherein the negative active material layer further comprises a cellulose compound.

12. The negative electrode (20) for a rechargeable lithium battery (100) as claimed in any of the claims 1 to 11, wherein the cellulose compound comprises carboxymethyl cellulose, hydroxypropylmethyl cellulose, methyl cellulose, an alkali metal salts thereof, or a combination thereof.

13. The negative electrode (20) for a rechargeable lithium battery (100) as claimed in any of the claims 1 to 12, wherein the negative active material comprises a silicon-based negative active material.

14. The negative electrode (20) for a rechargeable lithium battery (100) as claimed in any of the claims 1 to 13, wherein the silicon-based negative active material comprises silicon and carbon.

15. A rechargeable lithium battery (100), comprising:
a negative electrode (20) as claimed in any one of claim 1 to claim 14;
a positive electrode (10); and
a non-aqueous electrolyte.
